# EUROPEAN PATENT APPLICATION

(11) **EP 4 138 255 A1**
(43) Date of publication of application: **22.02.2023**
(21) Application number: 21788816.3
(22) Date of filing: 12.04.2021
(51) Int. Cl.: H02J 7/00

(54) **CONNECTION STRUCTURE OF ADAPTER SEAT AND MOBILE POWER SUPPLY**

(30) Priority: 13.04.2020 CN 202020539860 U
(71) Applicant: Zhejiang Lera New Energy Power Technology Co., Ltd., Ningbo, Zhejiang 315000 (CN)
(72) Inventor: WANG, Hongbo, Ningbo, Zhejiang 315000 (CN); DAI, Jianhong, Ningbo, Zhejiang 315000 (CN)
(74) Representative: Elzaburu S.L.P.
(86) International application number: PCT/CN2021/086604
(87) International publication number: WO 2021/208852

(57) **Abstract**

A connection structure of an adapter base and a mobile power supply includes the mobile power supply and the adapter base. A first power output interface is arranged in the mobile power supply. The mobile power supply is half-wrapped in the adapter base, and the mobile power supply is detachably connected to the adapter base. An electrical connection terminal and a second power output interface are arranged on the adapter base. The electrical connection terminal is detachably connected to the first power output interface, and the second power output interface is configured to be adapted to an electrical terminal of a power tool. In the half-wrapped connection structure of the adapter base and the mobile power supply, the mobile power supply is simple to disassemble and assemble and is convenient for heat dissipation during use.

## Description

### TECHNICAL FIELD

The present disclosure relates to the technical field of a hook structure in power tools, and more particularly to a connection structure of an adapter base and a mobile power supply.

### BACKGROUND

The prior power tools are powered by special battery packs, but when the power tools are idle, the corresponding battery packs are also idle, thereby resulting in waste of resources. Therefore, the structure of the battery pack of power tools is changed to be similar to that of mobile power supplies on the market. When the power tools are idle, the battery packs in the power tools can be removed to power 3C and other small electronic products, thereby serving as the function of the power bank to avoid waste of resources.

Aiming at the structure optimization of the battery pack, accordingly, an adapter base is arranged on the power tool to detachably arrange the battery pack in the adapter base. When the power tool needs to work, the battery pack is installed into the adapter base to power the power tool. When the power tool is idle, the battery pack can be removed from the adapter base for use by 3C and other electronic products. The prior connection structure of the adapter base and the mobile power supply is fully wrapped, that is, the battery pack is fully wrapped in the adapter base. During use, the battery pack generates heat intensely and cannot dissipate heat fast. When the power tool is idle and the battery pack needs to be removed, an additional tool is usually required, or it is very inconvenient to remove the battery pack.

### SUMMARY

In view of the above shortcomings of the prior art, the technical problem is solved by the present disclosure, where a connection structure of an adapter base and a mobile power supply is provided which has simple disassembly and a good heat dissipation effect. In the technical solution adopted by the present disclosure to solve the technical problems, a connection structure of an adapter base and a mobile power supply includes:
the mobile power supply, where a first power output interface is arranged in the mobile power supply; and the adapter base, where the mobile power supply is half-wrapped in the adapter base, and the mobile power supply is detachably connected to the adapter base. An electrical connection terminal and a second power output interface are arranged on the adapter base. The electrical connection terminal is detachably connected to the first power output interface, and the second power output interface is configured to be adapted to an electrical terminal of a power tool.

Further, the adapter base is provided with an outer surface. A mounting groove is formed in the outer surface, and the mobile power supply is detachably installed in the mounting groove.

Further, the adapter base further includes a side wall adjacent to the outer surface, and the mounting groove penetrates through the side wall.

Further, the mobile power supply is arranged as a cuboid and includes two main surfaces arranged in parallel and four side surfaces.

Further, when the mobile power supply is installed in the mounting groove, one of the main surfaces and at least one of the side surfaces of the mobile power supply are exposed outside the adapter base.

Further, relative to the main surface exposed outside the adapter base, the other main surface abuts against the adapter base.

Further, the mounting groove includes two inner side surfaces arranged in parallel, and a lock block is arranged on each of the inner side surfaces. A guide groove and a lock groove are formed in each of two parallel side surfaces of the mobile power supply. The guide groove is communicated with the lock groove, and the lock block is detachably arranged in the lock groove.

Further, a first universal serial bus (USB) interface and a second USB interface are arranged in the mobile power supply. The first USB interface and the second USB interface are configured to supply power to 3C electronic products. Specially, the first USB interface or the second USB interface is further configured to charge the mobile power supply.

Further, a third USB interface is arranged in the adapter base, and the output power of the third USB interface is greater than the output power of the first USB interface and the second USB interface.

Further, a button with a limit block is respectively arranged on both sides of the adapter base, and the power tool is provided with a limit groove adapted to the limit block. The limit block is movably arranged in the limit groove, and the limit block can be separated from the limit groove by pressing the button.

Compared with the prior art, the present disclosure has at least the following advantages:
In the present disclosure, the mounting groove is formed in the outer surface of the adapter base, and the mounting groove penetrates one of the side walls adjacent to the outer surface. The mobile power supply is detachably installed in the mounting groove, and the mobile power supply and the adapter base form a half-wrapped connection structure, that is, one of the main surfaces and at least one of the side surfaces of the mobile power supply are exposed outside the adapter base. In this way, the heat dissipation effect of the mobile power supply is significantly improved. When the mobile power supply is assembled or disassembled, it only needs to insert along the lock blocks or the lock blocks exit along the guide grooves, and no additional tool is required, which is convenient to assemble and disassemble. When the power tool is idle, the adapter base and the mobile power supply are removed from the power tool, and the removed mobile power supply can be used to supply power to small electronic products such as 3C. When the electric tool is working, the mobile power supply and the adapter base are cooperatively inserted into the power tool to supply power to the power tool. Therefore, the mobile power supply has a wide range of applications.

### BRIEF DESCRIPTION OF THE DRAWINGS

FIG. 1 is a schematic diagram of an overall structure of the present disclosure.
FIG. 2 is a schematic diagram of the structure of FIG. 1 from another perspective.
FIG. 3 is a dorsal view of FIG. 1.
FIG. 4 is a dorsal view of FIG. 2.
FIG. 5 is an exploded view of FIG. 1.
FIG. 6 is a schematic diagram of the structure of a mobile power supply.
FIG. 7 is the side view of FIG. 6.
FIG. 8 is a cross-section view of FIG. 7 along A-A.
FIG. 9 is a schematic diagram of the structure of a button.
In the figures:
1. mobile power supply; 10, first power output interface; 11. main surface; 12, side surface; 120, guide groove; 121, lock groove; 13, first USB interface; 14, second USB interface;
2. adapter base; 20, second power output interface; 21, electrical connection terminal; 22, outer surface; 23, side wall; 24, third USB interface; 25, button; 251, limit block; 220, mounting groove; 2201, inner side surface; 2202, lock block.

### DETAILED DESCRIPTION OF THE EMBODIMENTS

The specific embodiments of the present disclosure are illustrated as follows, and the technical solution of the present disclosure is further described in combination with the attached drawings, but the present disclosure is not limited to these embodiments.

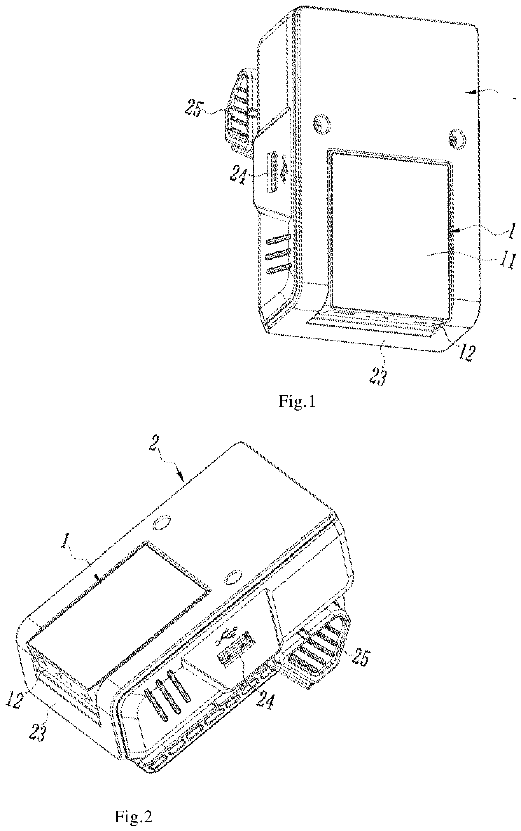

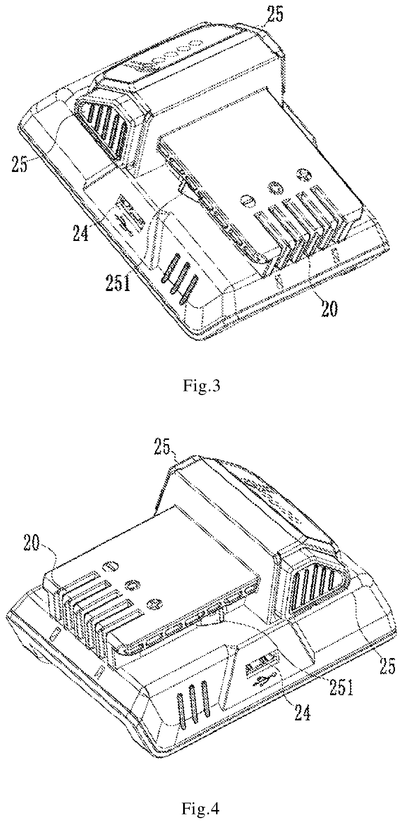

As shown in FIGS. 1 to 5, a connection structure of an adapter base and a mobile power supply includes the mobile power supply 1 and the adapter base 2. The mobile power supply 1 and the adapter base 2 are detachably connected and form a half-wrapped connection structure to improve heat dissipation effect and facilitate disassembly.

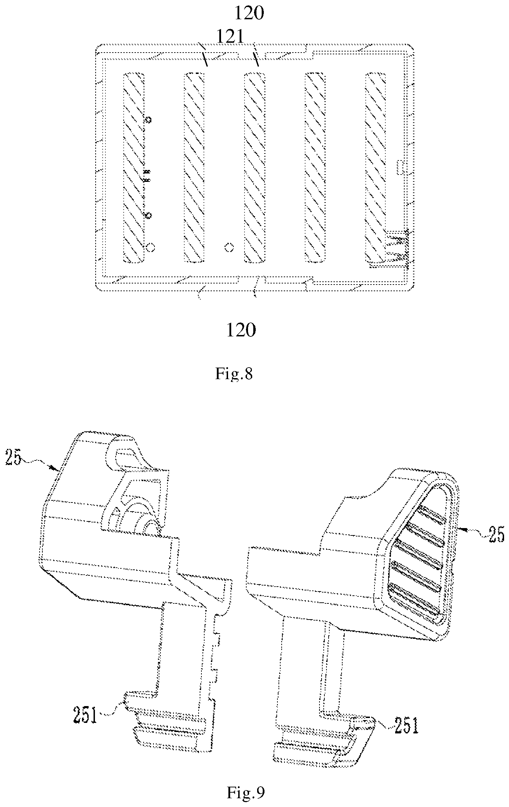

For the mobile power supply 1, the first power output interface 10 is arranged in the mobile power supply 1.For the adapter base 2, the mobile power supply 1 is half-wrapped in the adapter base 2, and the mobile power supply 1 is detachably connected to the adapter base 2. The electrical connection terminal 21 and the second power output interface 20 are arranged on the adapter base 2. The electrical connection terminal 21 is detachably connected to the first power output interface 10, and the second power output interface 20 is configured to be adapted to an electrical terminal of a power tool. The electric energy of the mobile power supply 1 is output to the power tool through the second power output interface 20 on the adapter base 2 and the electrical terminal on the power tool to supply power to the power tool. Specifically, the mobile power supply 1 and the adapter base 2 are cooperatively installed into the power tool in a free disassembly and assembly way, that is, as shown in FIG. 9, the button 25 with the limit block 251 is respectively arranged on both sides of the adapter base 2, and the power tool is provided with a limit groove adapted to the limit block 251. The limit block 251 is movably arranged in the limit groove, and the limit block 251 can be separated from the limit groove by pressing the button 25. A reset spring (not marked in the figures) is arranged between the two buttons 25. When the buttons 25 are released, the buttons 25 and the limit blocks 251 can return to their original positions under the action of the reset spring. Moreover, when the limit blocks 251 are locked in the limit grooves, the reset spring can prevent the limit blocks 251 from separating from the limit grooves to ensure the reliability of the lock.

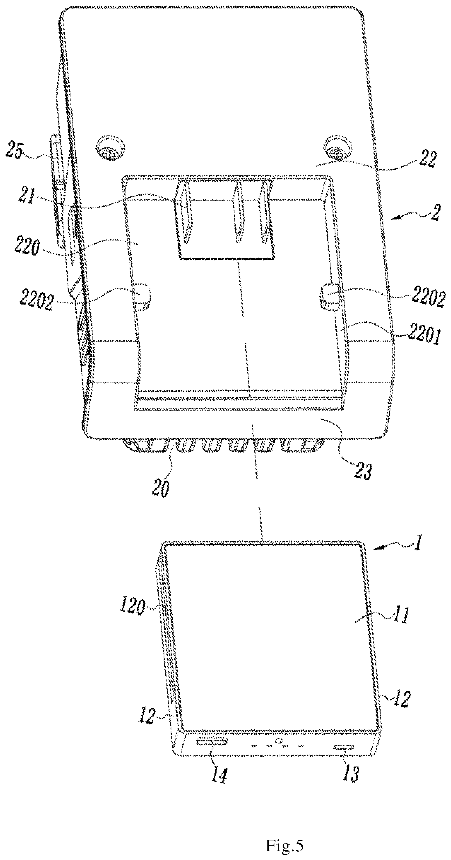

Preferably, as shown in FIG. 5, the adapter base 2 is provided with the outer surface 22, that is, the bottom surface of the adapter base 2. The mounting groove 220 is formed in the outer surface 22 and is roughly rectangular, and the mobile power supply 1 is detachably installed in the mounting groove 220. The adapter base 2 further includes the side wall 23 adjacent to the outer surface. The mounting groove 220 penetrates through the side wall 23. However, in the prior adapter base, the mobile power supply is wrapped in a fully-wrapped way and is sealed by a cover plate, such that in the working process of the mobile power supply, the generated heat cannot be dissipated in time, which results in severe heating of the mobile power supply, and affects the energy conversion efficiency and service life of the mobile power supply. Therefore, blind holes are formed in the middle of the prior adapter base, and a cover plate is externally arranged to limit the mobile power supply to the battery compartment. In the present disclosure, the rectangular mounting groove 220 is formed in the outer surface 22 of the adapter base 2 and penetrates through the side wall 23, such that the mobile power supply dissipates heat fast, and no additional tool is required during the disassembly.

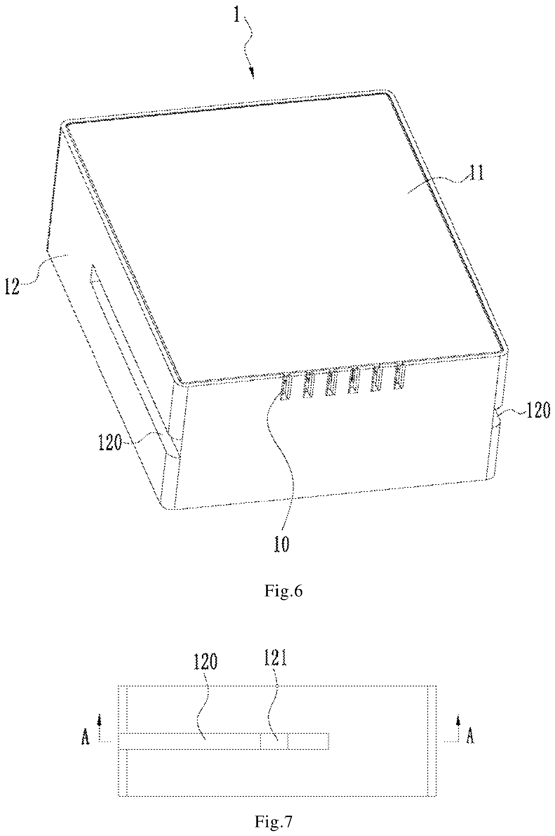

Specially, as shown in FIGS. 6 to 8, the mobile power supply 1 is arranged as a cuboid, and includes two main surfaces 11 arranged in parallel and four side surfaces 12, that is, the six surfaces of the cuboid. The top surface and the bottom surface are the surfaces with the largest area, and the area of each of the side surfaces is smaller than the area of the top surface and the area of the bottom surface. When the mobile power supply 1 is installed in the mounting groove 220, one of the main surfaces 11 and at least one of the side surfaces 12 of the mobile power supply 1 are exposed outside the adapter base 2. In other words, one of the main surfaces 11 and one of the side surfaces 12 of the mobile power supply 1 are not in contact with the adapter base 2. The main surface 11 has a large area and dissipates heat fast when exposed externally. Relative to the main surface 11 exposed outside the adapter base 2, the other main surface 11 abuts against the adapter base to prevent the mobile power supply 1 from moving up and down after the mobile power supply 1 is installed in the mounting groove 220. After the mobile power supply 1 is installed in place, the six degrees of freedom are limited, such that during use, the mobile power supply 1 does not shake to prevent the mobile power supply 1 from being burned out due to poor contact.

The mounting groove 220 includes two inner side surfaces 2201 arranged in parallel, and the lock blocks 2202 are arranged on the inner side surfaces 2201. The lock block 2202 is arranged on each of the inner side surfaces 2201, and the lock block 2202 has a certain elasticity to facilitate the smooth removal of the mobile power supply 1. The two lock blocks 2202 on the two inner side surfaces are symmetrically arranged. As shown in FIGS. 6 to 8, the guide groove 120 and the lock groove 121 are formed in each of the parallel side surfaces 12 of the mobile power supply 1. The guide groove 120 is communicated with the lock groove 121, and the lock block 2202 is detachably arranged in the lock groove 121. That is, when the mobile power supply 1 needs to be installed into the mounting groove 220, the guide grooves 120 on both sides of the mobile power supply 1 are close to the lock blocks 2202, and the mobile power supply 1 is pushed inward, such that the lock blocks 2202 gradually slide into the lock grooves 121 along the guide grooves 120. When the lock blocks 2202 slide completely into the lock grooves 121, that is, when the mobile power supply 1 is installed in place, the electrical connection terminal 21 of the adapter base 2 is tightly fitted in the first power output interface 10 of the mobile power supply 1, and it is ensured that the mobile power supply 1 will not slide off the adapter base 2 when the power tool is operated to vibrate. When the mobile power supply 1 needs to be removed from the mounting groove 220, since the lock blocks 2202 are elastic, the mobile power supply 1 is pulled outward forcefully, and the lock blocks 2202 are separated from the lock grooves 121 and slide out along the guide grooves 120. When the lock blocks 2202 are completely separated from the guide grooves 120, the mobile power supply 1 completes the disassembly and can serve as the power bank to be used.

Further, the first USB interface 13 and the second USB interface 14 are arranged in the mobile power supply 1. The first USB interface 13 and the second USB interface 14 are configured to supply power to 3C electronic products. Specially, the first USB interface 13 or the second USB interface 14 is further configured to charge the mobile power supply 1. The mobile power supply 1 of the present disclosure is different from the ordinary power bank in that there is a USB interface which can not only supply power for 3C small electronic products, but also charge the mobile power supply 1 by connecting a charging line, such that the mobile power supply 1 can charge and discharge repeatedly. The third USB interface 24 is arranged in the adapter base 2, and the output power of the third USB interface 24 is greater than the output power of the first USB interface 13 and the second USB interface 14. In this way, the third USB interface of the adapter base 1 can be applied to electronic products requiring a high power supply, while the first USB interface 13 and the second USB interface 14 of the mobile power supply 1 can be used for electronic products requiring a low power supply to have a wide range of applications.

In the half-wrapped connection structure of the adapter base 2 and the mobile power supply 1 of the present solution, the mobile power supply 1 is simple to disassemble and assemble, and the heat generated by the mobile power supply 1 in use can be dissipated fast to ensure that the mobile power supply 1 has a long service life.

The specific embodiments described in the present disclosure are only examples of the spirit of the present disclosure. Those skilled in the art of the present disclosure may modify or supplement the described specific embodiments or replace them in a similar way, but will not deviate from the spirit of the present disclosure or go beyond the scope defined in the appended claims.

## Claims

1. A connection structure of an adapter base and a mobile power supply, comprising:
the mobile power supply, wherein a first power output interface is arranged in the mobile power supply; and
the adapter base, wherein the mobile power supply is half-wrapped in the adapter base, and the mobile power supply is detachably connected to the adapter base; an electrical connection terminal and a second power output interface are arranged on the adapter base; the electrical connection terminal is detachably connected to the first power output interface, and the second power output interface is configured to be adapted to an electrical terminal of a power tool.

2. The connection structure of the adapter base and the mobile power supply according to claim 1, wherein the adapter base is provided with an outer surface, a mounting groove is formed in the outer surface, and the mobile power supply is detachably installed in the mounting groove.

3. The connection structure of the adapter base and the mobile power supply according to claim 2, wherein the adapter base further comprises a side wall adjacent to the outer surface, and the mounting groove penetrates through the side wall.

4. The connection structure of the adapter base and the mobile power supply according to claim 2 or 3, wherein the mobile power supply is arranged as a cuboid and comprises two main surfaces arranged in parallel and four side surfaces.

5. The connection structure of the adapter base and the mobile power supply according to claim 4, wherein when the mobile power supply is installed in the mounting groove, one of the main surfaces and at least one of the side surfaces of the mobile power supply are exposed outside the adapter base.

6. The connection structure of the adapter base and the mobile power supply according to claim 5, wherein relative to the main surface exposed outside the adapter base, the other main surface abuts against the adapter base.

7. The connection structure of the adapter base and the mobile power supply according to claim 2, wherein the mounting groove comprises two inner side surfaces arranged in parallel, and a lock block is arranged on each of the inner side surfaces; a guide groove and a lock groove are formed in each of two parallel side surfaces of the mobile power supply, wherein the guide groove is communicated with the lock groove, and the lock block is detachably arranged in the lock groove.

8. The connection structure of the adapter base and the mobile power supply according to claim 1, wherein a first universal serial bus (USB) interface and a second USB interface are arranged in the mobile power supply; the first USB interface and the second USB interface are configured to supply power to 3C electronic products; wherein the first USB interface or the second USB interface is further configured to charge the mobile power supply.

9. The connection structure of the adapter base and the mobile power supply according to claim 8, wherein a third USB interface is arranged in the adapter base, and an output power of the third USB interface is greater than an output power of the first USB interface and the second USB interface.

10. The connection structure of the adapter base and the mobile power supply according to claim 1, wherein a button with a limit block is respectively arranged on both sides of the adapter base, and the power tool is provided with a limit groove adapted to the limit block; the limit block is movably arranged in the limit groove, and the limit block can be separated from the limit groove by pressing the button.
